# EUROPEAN PATENT APPLICATION

(11) **EP 4 814 718 A1**
(43) Date of publication of application: **30.09.2026**
(21) Application number: 25166660.8
(22) Date of filing: 27.03.2025
(51) Int. Cl.: G06F 9/50, G06F 1/3206, G06F 1/3234, H04L 41/0833, G06F 9/455

(54) **DEVICE AND METHOD FOR MONITORING AND CONTROLLING THE ENERGY CONSUMPTION OF DISTRIBUTED APPLICATIONS DEPLOYED ACROSS A DATA PROCESSING AND COMMUNICATION SYSTEM**

(71) Applicant: NTT DOCOMO, INC., Tokyo 100-6150 (JP)
(72) Inventor: ARFAOUI, Afaf, 80687 Munich (DE); KATSALIS, Konstantinos, 80687 Munich (DE); NORMANN, Henrik, 80687 Munich (DE); GUERZONI, Riccardo, 80687 Munich (DE); TRIAY MARQUES, Joan, 80687 Munich (DE); TANAKA, Itsuma, 80687 Munich (DE); KUNO, Yuya, Tokyo, 100-6150 (JP)
(74) Representative: Viering, Jentschura & Partner mbB Patent- und Rechtsanwälte

(57) **Abstract**

According to one embodiment, a method for monitoring and controlling the energy consumption of distributed applications deployed across a data processing and communication system is described, comprising providing each module of multiple modules of the application at a respective resource location, monitoring, for each module, deployed at a respective resource location, of multiple modules of an application, an energy consumption of providing the module at the respective resource location and checking whether the energy consumption of providing the module at the resource location exceeds a predetermined energy budget of the module and, for each module of the multiple modules, in reaction to a detection that the energy consumption of the provision of the module at the respective resource location exceeds the energy budget of the module, perform one or more energy control actions to control the energy consumption for providing the application.

## Description

The present disclosure relates to monitoring and controlling the energy consumption of distributed applications deployed across a data processing and communication system.

Various services can be provided by applications, like artificial intelligence-based services, extended reality services, network slices, etc., require high computational effort. Therefore, instead of deploying the whole service on cloud devices only, and having the data traversing the network from the source to the cloud for processing, a practical practice is to split the services into modules (each performs a particular processing task) and distribute these modules over multiple locations (e.g., mobile terminals, radio access network, core network, cloud, etc.). By enabling data to be processed closer to the source and along the network path, this approach reduces latency and bandwidth usage, which is crucial for real-time applications. It also reduces the amount of traffic traversing the network (from the mobile terminals all the way to the cloud).

In such a distributed processing scenario, it is important to have control of energy consumption to ensure sustainability and cost-effectiveness. High computational tasks can lead to significant energy usage, and without proper management, this can result in increased operational costs and environmental impact. By controlling energy consumption, a balance between performance and efficiency can be achieved, making the deployment of these advanced services more viable and environmentally friendly.

Therefore, approaches allowing the management and control of energy consumption of such distributed applications/services, e.g. to avoid excessive energy consumption at certain locations, are desirable.

According to one embodiment, a method for monitoring and controlling the energy consumption of distributed applications deployed across a data processing and communication system is provided, comprising
- monitoring, for each module, deployed at a respective resource location, of multiple modules of an application, an energy consumption of providing the module at the respective resource location and checking whether the energy consumption of providing the module at the resource location exceeds a predetermined energy budget of the module and
- for each module of the multiple modules, in reaction to a detection that the energy consumption of the provision of the module at the respective resource location exceeds the energy budget of the module, perform one or more energy control actions to control the energy consumption for providing the application.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio (i.e. mobile) communication system configured according to 5G (Fifth Generation).
- Figure 2: illustrates that each module of an application can comprise one or multiple virtualization components.
- Figure 3: illustrates resources of a processing and communication system.
- Figure 4: illustrates the provision of applications by a data processing and communication system.
- Figure 5: illustrates that modules having an excess of energy consumption.
- Figure 6: illustrates the migration of a module from one hardware to another hardware within the same site.
- Figure 7: illustrates an example of energy consumptions actions that can be taken according to various embodiments. In this example, the action is the computation of a module budget penalty due to a module budget excess. The penalty is to be forwarded to the orchestrator managing other module(s) of the same application deployed elsewhere (in other location(s)). The orchestrator can apply the penalty to reduce the energy consumption of the modules of the same application.
- Figure 8: illustrates another example of energy consumption control actions that can be taken according to various embodiments. In this example, this includes communicating with entities that monitor and control the energy consumption in other locations to find a new placement for a module which exceeds its allocated energy budget. The information about the new (found) placement is then forwarded to the orchestrator, the latter can perform the migration of the module to the indicated (found) location.
- Figure 9: shows an example where a module is implemented by two virtual machines.
- Figure 10: gives example of outputs of an energy consumption component (ECC) on an interface to the orchestrator.
- Figure 11: shows a flowchart of an example of a process performed by an ECC for the case that a module budget is exceeded according to an exemplary embodiment.
- Figure 12: shows a flowchart of an example of a process performed by an ECC for the case that a resource location budget is exceeded according to an exemplary embodiment.
- Figure 13: shows an implementation option where the ECC 1301 is part of an NFV-MANO (network functions virtualization management and orchestration) 1302.
- Figure 14: shows an implementation option where an ECC is implemented as an rAPP in a SMO (Service Management and Orchestration) of an ORAN (Open RAN) architecture.
- Figure 15: shows an implementation option where an ECC is part of a core network.
- Figure 16: shows another implementation option where an ECC is part of a core network.
- Figure 17: shows another implementation option where an ECC is part of a core network.
- Figure 18: shows an implementation option where an ECC is part of an MDAF (Management Data Analytics Function) in 3GPP (Third Generation Partnership Project) network management.
- Figure 19: illustrates an ECC-to-ECC interface according to an embodiment.
- Figure 20: shows a flow diagram illustrating a method for monitoring and controlling the energy consumption of distributed applications deployed across a data processing and communication system according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for monitoring and controlling the energy consumption of distributed applications deployed across a data processing and communication system, comprising monitoring, for each module, deployed at a respective resource location, of multiple modules of an application, an energy consumption of providing the module at the respective resource location and checking whether the energy consumption of providing the module at the resource location exceeds a predetermined energy budget of the module and for each module of the multiple modules, in reaction to a detection that the energy consumption of the provision of the module at the respective resource location exceeds the energy budget of the module, perform one or more energy control actions to control the energy consumption for providing the application.
Example 2 is the method of example 1, wherein the one or more energy control actions comprise at least one energy control action to reduce the energy consumption for providing the application.
Example 3 is the method of example 1 or 2, wherein the one or more energy control actions comprise at least one energy control action to reduce the energy consumption for providing the module at the resource location.
Example 4 is the method of any one of examples 1 to 3, wherein the one or more energy control actions comprise changing the resource location at which the module is provided.
Example 5 is the method of any one of examples 1 to 4, wherein the one or more energy control actions comprise reducing the energy budget of one or more other modules of the multiple modules (of the same application).
Example 6 is the method of any one of examples 1 to 5, wherein the one or more energy control actions comprises determining whether the module can be provided partially at the respective resource location and partially at at least one other resource location in a manner that providing the module partially at the respective resource location and partially at the at least one other resource location has an energy consumption which does not exceed the energy budget of the module and, in reaction to a determination that the module can be provided partially at the respective resource location and partially at at least one other resource location in a manner that providing the module partially at the respective resource location and partially at the at least one other resource location has an energy consumption which does not exceed the energy budget of the module, providing the module partially at the respective resource location and partially at the at least one other resource location (e.g. move a virtual machine or a container (partially) implementing the module).
Example 7 is the method of example 6, wherein providing the module partially at the respective resource location and partially at the at least one other resource location comprises providing one or more first virtualization components for providing the module on the respective resource location and one or more second virtualization components one the at least one other resource location.
Example 8 is the method of example 6 or 7, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module, providing the module completely at another resource location if it is possible to provide the module completely at another resource location in a manner that providing the module does not exceed the energy budget of the module.
Example 9 is the method of example 6 or 7, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module, reducing the energy budget of one or more other modules of the multiple modules (of the same application deployed in other resource locations) by, in total, an amount by which the energy consumption of providing the module at the resource location exceeds the energy budget of the module.
Example 10 is the method of example 9, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module and it is not possible to reduce the energy budget of one or more other modules of the multiple modules by, in total, an amount by which the energy consumption of providing the module at the resource location exceeds the energy budget of the module, providing the module completely at another resource location if it is possible to provide the module completely at another resource location in a manner that providing the module does not exceed the energy budget of the module.
Example 11 is the method of example 6 or 7, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module and it is not possible to provide the module completely at another resource location in a manner that providing the module does not exceed the energy budget of the module, reducing the energy budget of one or more other modules of the multiple modules by, in total, an amount by which the energy consumption of providing the module at the resource location exceeds the energy budget of the module.
Example 12 is the method of any one of examples 1 to 11, further comprising monitoring, for each module of the multiple modules, an energy consumption of the respective resource location and, in reaction a determination that a resource location providing one of the multiple modules exceeds an energy budget of the resource location, performing the one or more energy control actions for the determined module.
Example 13 is the method of any one of examples 1 to 12, wherein the one or more energy control actions comprise at least monitoring an energy consumption of providing the application (i.e. a total energy consumption, e.g. including the energy consumption of providing all the modules) and performing one or more further energy control actions (e.g. as described in the examples above) depending on whether the energy consumption of providing the application exceeds an energy budget of the application.
Example 14 is a data processing and communication system component, configured to perform a method of any one of examples 1 to 13.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

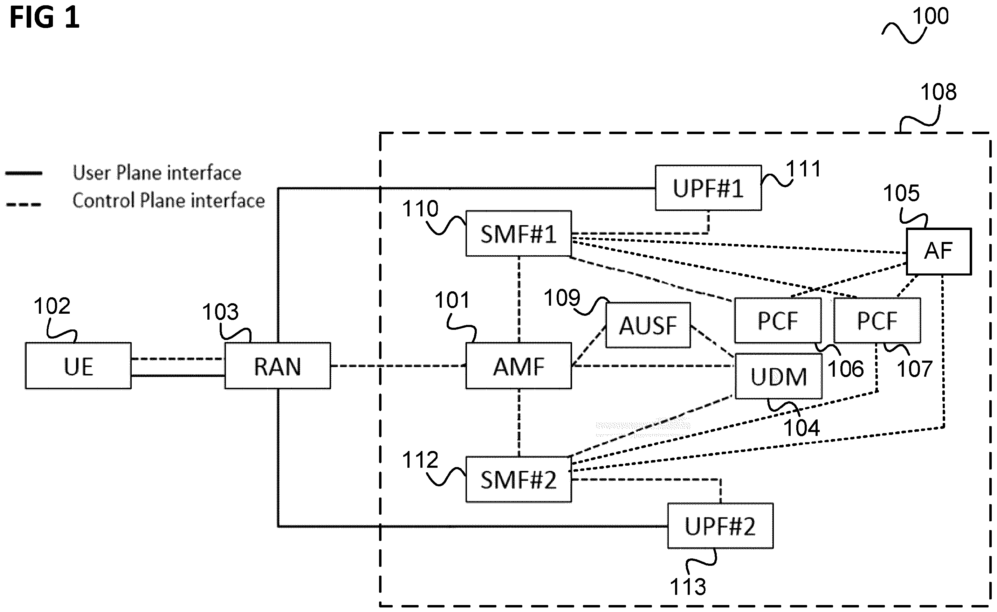

Figure 1 shows a radio (i.e. mobile) communication system 100 configured according to 5G (Fifth Generation), e.g. according to 3GPP (Third Generation Partnership Project). This serves only as example and other architectures (e.g. a 4G or 6G architecture or a combination thereof) may also be used.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN), also referred to telecommunication network. The telecommunication network may form the connection between the mobile terminal 102 and other computing devices like edge or cloud devices (e.g. located in the Internet).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (CN, here 5GC) 108 which includes a plurality of core network nodes including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a UE 102 that establishes a PDU session to provide a communication service for that application. The core network 119 may include further components such as a Network Data Analytics Function (NWDAF) and a network repository function (NRF), not shown in figure 1. The NWDAF is responsible for providing network analysis and/or prediction information upon request from network functions. For example, a network function may request specific analysis information on the load level of a particular network slice instance. The NRF can be interrogated by any connected network function (e.g. AMF, SMF, PCF) to get information to discover another network function.

An application may also involve computational tasks, like for example for artificial intelligence. Examples include applications for robot control and augmented reality (for a mobile terminal). This may require computation-intensive tasks (and thus also tasks with high energy consumption). An application as used in the following can also be a network function. The tasks for such an application may be distributed to multiple components of the communication system 100 (including offloading computation-intensive tasks requiring high energy consumption to network endpoints), such as the UE 102 itself and one or more cloud devices connected to the mobile communication network 103, 108 (and thus to the mobile terminal 102) via a UPF 111, 113. So, tasks for an application may be offloaded to run side by side with the components of the communication system 100 enabling to use the underlying hardware to the fullest. Application tasks may also be distributed over in-network hardware components, i.e. deployed alongside network functions of the communication network, i.e. in-network computing (INC) may be used which involves distributing (in particular intensive) computational tasks throughout the networking infrastructure.

INC for example leverages network appliances (e.g., switches) and acceleration resources (e.g., SmartNICs, GPUs (graphics processing units), DPUs (data processing units), etc.) to execute data processing tasks. Usage of INC enables data processing to occur much nearer to the data source and in the network along the paths that data traverses as it flows through the network reducing thereby the latency as well as the amount of the traffic traversing the network. Use cases include XR (extended reality) applications, preprocessing of data, AI/ML (artificial intelligence / machine learning) applications, 3D video streaming, etc.

The distribution of tasks of an application may be in line of an application consisting of a set of modules (i.e. tasks of different modules may be split to different data processing nodes). For example, an XR application could consist of the following modules:
- Module #1: collecting data about user's position and their head movement
- Module #2: rendering static components of the scene
- Module #3: rendering interactive elements of the scene
- Module #4: correcting lens distortions and showing final scene to the user

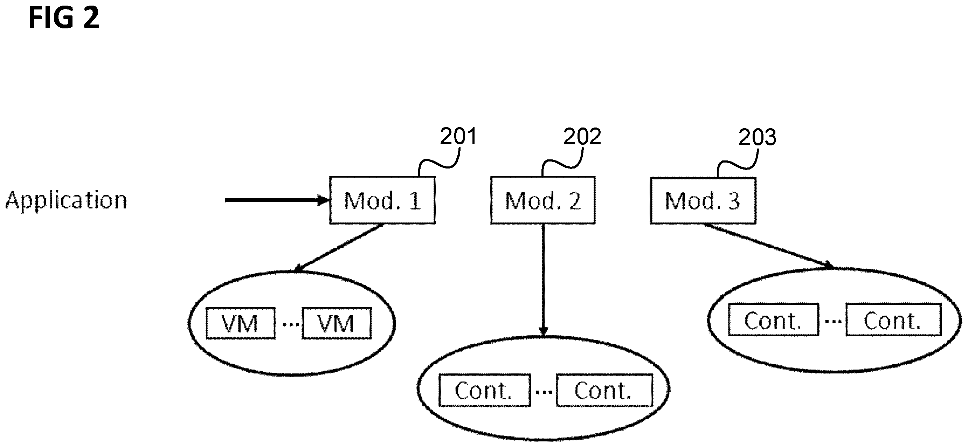

Figure 2 illustrates that each module 201, 202, 203 of an application (three in the illustrated example, but possible fewer or more) can comprise (or be implemented by) one or multiple virtual machines VMs, containers, eBPF (extended Berkeley Packet Filter) programs, etc. (or a combination thereof).

As described above, these modules can be deployed, in a distributed fashion, in different resource locations (e.g. UE, edge, network, and central cloud). This means that each module is provided (i.e. implemented or executed) at a respective resource location.

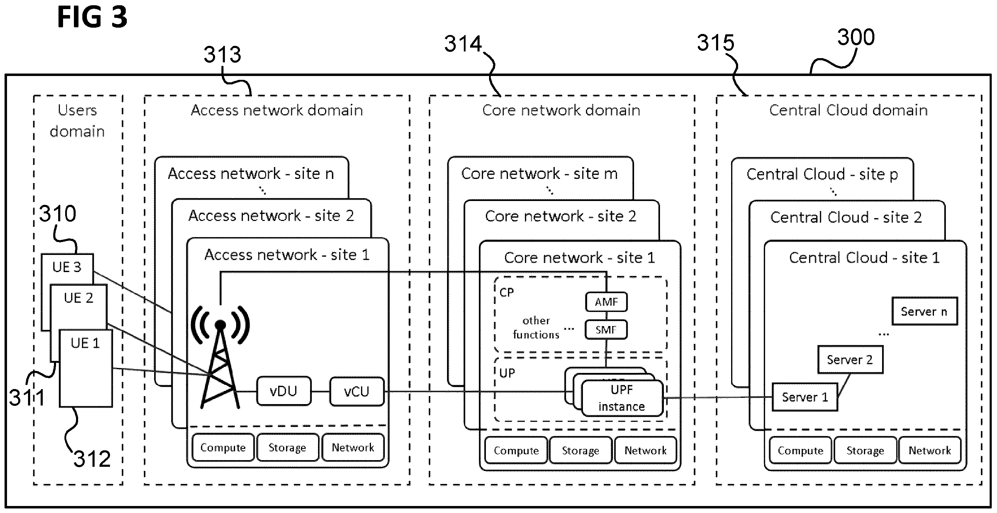

Figure 3 illustrates resources of a processing and communication system 300 (e.g. including a communication system like the one of figure 1 but in addition elements of the cloud domain).

The processing and communication system comprises mobile terminals 310-312, a radio access network 313, a core network 314 and a (e.g. central) cloud 315.

These are herein denoted as "domains", i.e. the term domain is used for differentiating between the access network 313, the core network 314, the mobile terminals 310-312 (i.e. the "user domain"), and the cloud 315 (each of these represents a different domain).

Respective "sites" implement the radio access network, the core network and the cloud. There could be one or multiple core network sites in the network. Each site includes one or more devices, i.e. host machines such as servers.

In figure 3, servers are only depicted in the cloud domain 315 but the network functions as well as the modules deployed in the core network 314 and the access network 313 are also deployed on servers.

Devices include hardware such as hardware compute resources like a CPU (central processing unit), a GPU (graphics processing unit), an NPU (neural processing unit) etc. or memory and disk storage resources.

The term "resource location" is used as a general term meaning where an application module (or a part of it like a virtual machine) is deployed. It may thus refer to a domain, site, device or hardware. For example, a location L is {Core network site 1, Server 14, GPU 3}.

Splitting applications into modules and offloading some of them to the network to perform part of the processing will increase the complexity of accounting for energy consumption as tasks are dispatched across, e.g., UE, network, edge, and central cloud.

In view of the above, means are provided to account for E2E (end-to-end) energy consumption from an application perspective.

It should be noted that in the following, In-network computing (INC) for providing an application such as for an AI application serves as an example (in particular of the purpose and the benefits of an Energy Consumption (Control) Component (ECC) as described below). However, the approaches described herein can be used in more generic way to provide an E2E energy monitoring and control for any type of application (including services) such as VNFs (virtual network functions), NSs (network services), slices, etc.). For example, the application in figure 2 may be a network service and the modules 201, 202, 203 may for example be virtual network functions. The ECC can be used to monitor VNFs and network slices. The action taken by the ECC in the case of applications could be the same as for network slices or VNFs or different. Also, the approaches described herein can be used by a public cloud service provider to monitor and control the energy consumption and the energy budgets of the applications or the functions deployed on their resources. ECC components can control one or more sites in a domain or one or more sites of different domains.

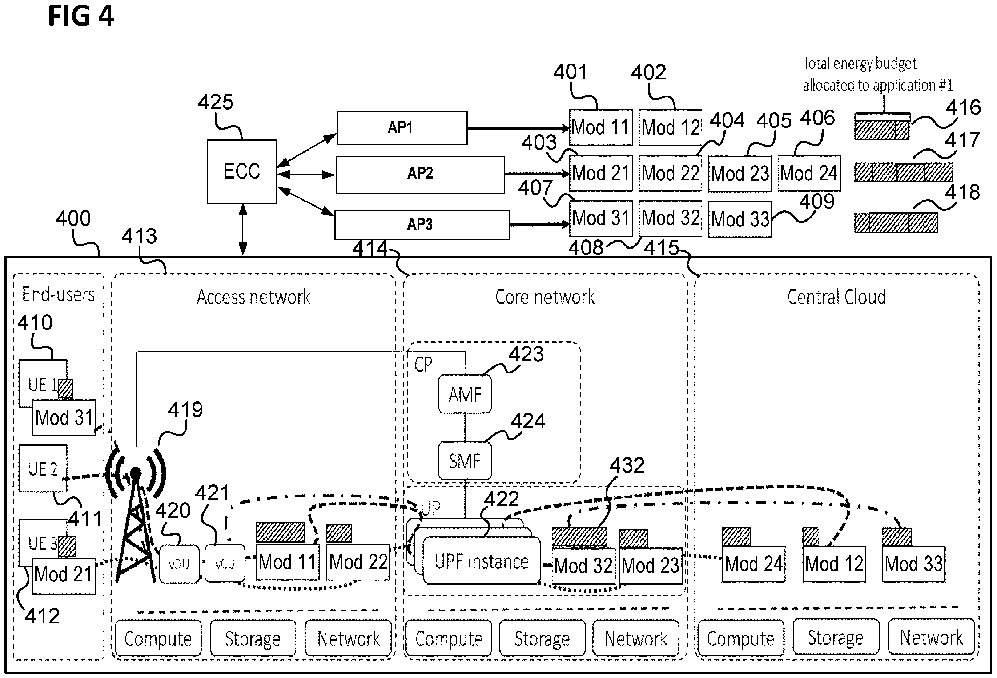

Figure 4 illustrates the provision of three applications (AP1, AP2 and AP3) by a data processing and communication system 400 (e.g. including a communication system like the one of figure 1 but in addition elements of the cloud domain).

The applications are for example applications such as 3D video streaming or an AI/ML application (e.g. training of an ML model or using an ML model for inference). An application may provide a certain service (such as streaming). As used herein, also the provision of a network slice is understood as an application (or possible multiple applications providing corresponding functionalities and/or services for providing the network slice such as network functions etc.).

Each application comprises multiple modules 401-409.

The communication system 400 comprises mobile terminals 410-412, a radio access network 413, a core network 414 and a (e.g. central) cloud 415.

Each of the radio access network 413, the core network 414 and the cloud 415 provide data processing resources (computational resources, storage resources, acceleration resources, and network (e.g. communication) resources) which may be used, for example, to offload modules of the applications from the mobile terminals 410-412 or to offload them from the central cloud 415. It should be noted that in the figures, only compute, storage and network resources are indicated. However, acceleration resources may also be used to run the modules.

This means that each module 401-409 is deployed (or "provided") at a respective resource location (i.e. by data processing resources of a respective resource location). The "respective" resource location can also be seen as resource location assigned (or allocated) to the module (or the module can be seen to be assigned to or associated with the resource location).

In the present example,
- the modules 401, 402 of AP1 (which is provided for the second mobile terminal 411) are provided in the radio access network 413 and in the cloud 415
- the modules 403-406 of AP2 (which is provided for the third mobile terminal 412) are provided in the third mobile terminal 412, the radio access network 413, the core network 414, and the cloud 415.
- the modules 407-409 of AP3 (which is provided for the first mobile terminal 410) are provided by the first mobile terminal 410, the core network 414 and the cloud 415.

When modules are distributed over different domains, i.e. a mobile terminal 410-412, the radio access network 413, the core network 414 and the cloud 415, data is exchanged over the communication system between the modules. For example, data is exchanged between the first module of the third application "Mod 31" with the second module of the third application "Mod 32"and the third module of the third application "Mod 33" via a radio tower 419, a virtual distributed unit 420 and a virtual centralized unit 421 of the radio access network 413, and a UPF instance 422 of the core network 414 involving control plane signalling via an AMF 423 and an SMF 424 of the core network 414.

A module being provided at a certain domain 410-412, 413, 414, 415 means that the module is provided using computational resources (allocated to the module and thus to the application), in particular hardware of one or more devices, e.g. at one or more sites of the respective domain (e.g., core network). Each module is provided at a certain resource location (which may refer to hardware, device, site or domain).

Each application has a respective allocated energy budget 416, 417, 418 consisting of an energy budget for each module of the respective application. The energy budget for an application is denoted as (total) application (energy) budget and the energy budget (or energy budget) of an application module is denoted as module (energy) budget and defines a limit of the energy that may be used to provide the module. The module budgets are shown as boxes above the modules. The size of the box represents the amount of energy that may be consumed to provide the respective module. Budgets can for example be agreed upon in a service level agreement (SLA), e.g. between the network operator and the application provider or slice provider.

For example, the second module 408 of the third application AP3 "Mod 32" has an energy budget 432 which may be used totally or partially to provide the second module 408. Similarly, a module budget of a module may be used totally or partially to provide the respective module.

The module budget of a module at a resource location may also be seen as budget for the respective application for that resource location (at least if only one module of the application is provided at that resource location). A resource location may thus also be seen as a module provision location or module provision resource. It should be noted that each resource location may have an energy budget, denoted as resource location (energy) budget. For example, a resource location may provide modules of different applications, whose module budgets are not exceeded but providing all of them may result in exceeding an energy budget of the resource location.

According to various embodiments, a component 425 denoted as Energy Consumption (Control) Component (ECC) is provided which is in charge of energy consumption monitoring and control. Each site of a domain may have one or more ECC controlling it.

According to an embodiment, the ECC 425 performs (at least some of) the following actions:
- Monitoring the energy consumption, energy budgets enforcement, of modules at each domain, site or device and updating an energy consumption registry (with logs, alarms history, and events).
- Providing necessary information related to energy consumption when a module needs to be:
   o deployed on another hardware or device to help reduce its energy consumption (e.g. in the same site) if a module budget is violated.
   ∘ migrated if necessary to another resource location (e.g. another site or domain) if module energy budget is violated or the resource location energy budget is violated.
- Computing penalty upon budget violation. The penalty is to be applied to reduce energy consumption of modules belonging to the same application.
- Communicating with other components (for example, ECC component in charge of monitoring energy consumption of other sites, orchestrators, etc.) to (i) find the appropriate placement (on a resource location i.e., device, site and/or domain) for one or more modules if migration is envisioned, (ii) learn about the energy consumption status in other locations, (iii) forward information about violations of energy budgets and eventual penalties to be applied to other modules of the same application..

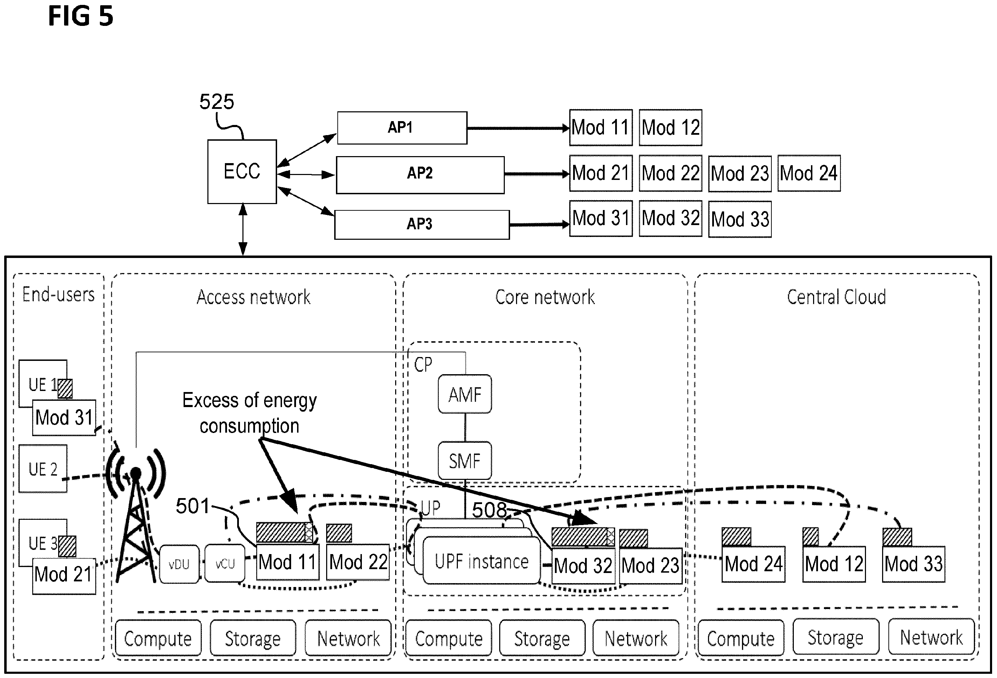

Figure 5 illustrates that the first module 501 of the first application AP1 and the second module 508 of the third application AP3 have an excess of energy consumption, i.e., exceed their respective module budgets.

This means that, for its first module 501, the first application AP1 and the third application AP3, for its second module 508, consume all (and more) of their allocated module budgets at the resource locations (hardware, devices, sites, domains) where the first module 501 of the first application AP1 and the second module 508 of the third application AP3 are provided.

According to various embodiments, approaches are provided to
- possibly compensate an excess of energy consumption in one resource location (due to a module excessing its energy budget) by reducing the energy consumption in other resource location.
- decide about reassigning application modules to other resource locations (e.g. in other sites) if a compensation cannot be guaranteed to be achieved.

By monitoring the energy consumption, the ECC 425, 525 can detect an excess of a module budgets as in the example of figure 5.

If the total application budget remains unaffected by the excess of module budget because other modules of the same application (than those whose budgets is exceeded, e.g. other modules provided at other resource locations) are not fully utilizing their budget, thereby ensuring the total energy budget of the application is not exceeded, and if, for example, the excess of energy consumption of a module does not exceed the total energy budget of the application and that of the resource location then, according to one embodiment, the ECC 425, 525 decides that no action is required. Optionally, the ECC 425, 525 can take an action to improve the energy consumption of a module exceeding its module budget (wherein the action is for example determined such that the application QoS (quality of service) is not negatively affected). The ECC 425, 525 may also monitor the excess consumption and plan for action to take if the energy budget of the resource location the application budget is eventually exceeded.

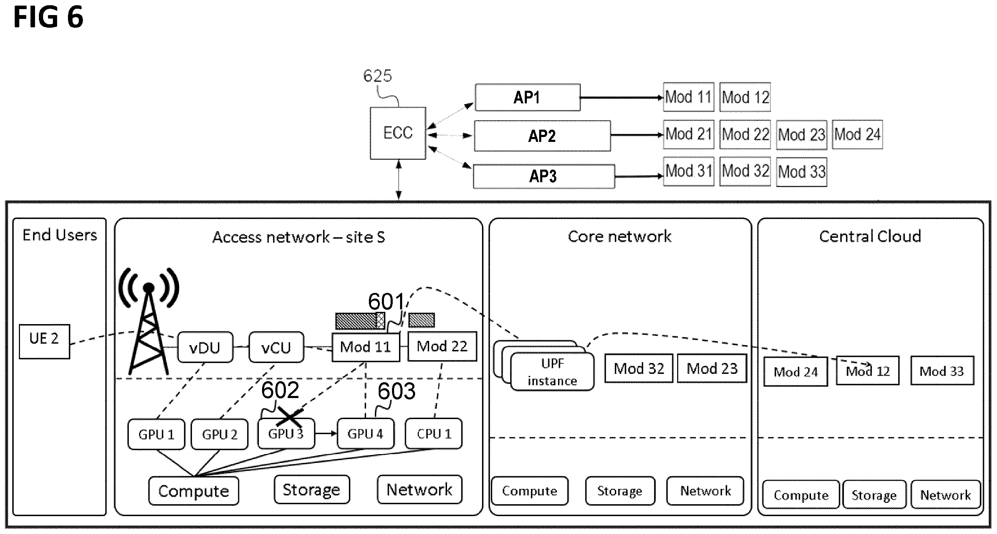

Figure 6 illustrates the migration of a module (the first module 601 "Mod 11" of the first application AP1 in the present example) to another hardware resource on the same site to reduce its energy consumption: the module 601 is migrated (e.g. at least partially) to another resource hardware (e.g. GPU, or CPU). In the example of figure 6, the module 601 is migrated from a first GPU 602 "GPU 3" to a second GPU 603 "GPU 4".

According to one embodiment, the ECC 625,
- if the application budget of an application module is exceeded, and
- if the excess of the energy consumption of a module does not result in exceeding the energy budget of the site where it is provided.
decides that the module is migrated to another hardware resource in the same site to ensure the respect of the application budget and the module budget.

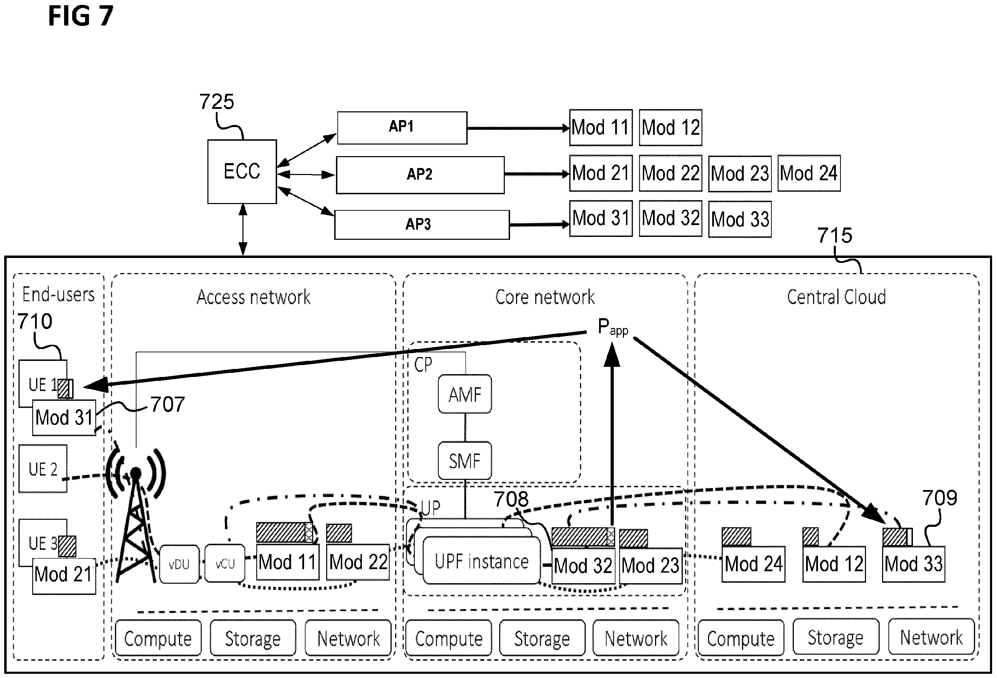

Figure 7 illustrates the application of a module budget penalty (i.e. penalty to a module budget) due to a module budget violation (of the second module 708 of the third application AP3 in the present example) to other modules of the application (the first module 707 and the third module 709 of the third application AP3 in the present example) provided at other resource locations (first mobile terminal 710 and cloud 715 in the present example). This leads to reducing the energy consumption of other modules at the other resource locations (e.g. other sites or domains). It should be noted that the penalty needs to be applied carefully because if, after applying it, the budget of a module is reduced too much this may lead again to violation of the new (reduced) budget,

According to one embodiment, the ECC 725,
- if the application budget of an application is exceeded, or
- if the excess of energy consumption of a module leads to that the resource location budget where it is provided is exceeded.
the ECC 725 computes a penalty (denoted as Papp in the present example) in accordance with the excess of energy consumption (e.g. it could be equal to the amount the respective module budget is exceeded). Depending on the energy consumption in other domains, the penalty is applied in one or more of the domains, to compensate for the excess of the module budgets. **In** the present example, the penalty is split into two parts and the module budget of the first module 707 of the third application AP3 is reduced by the first part and the module budget of the third module 709 of the third application AP3 is reduced by the second part.

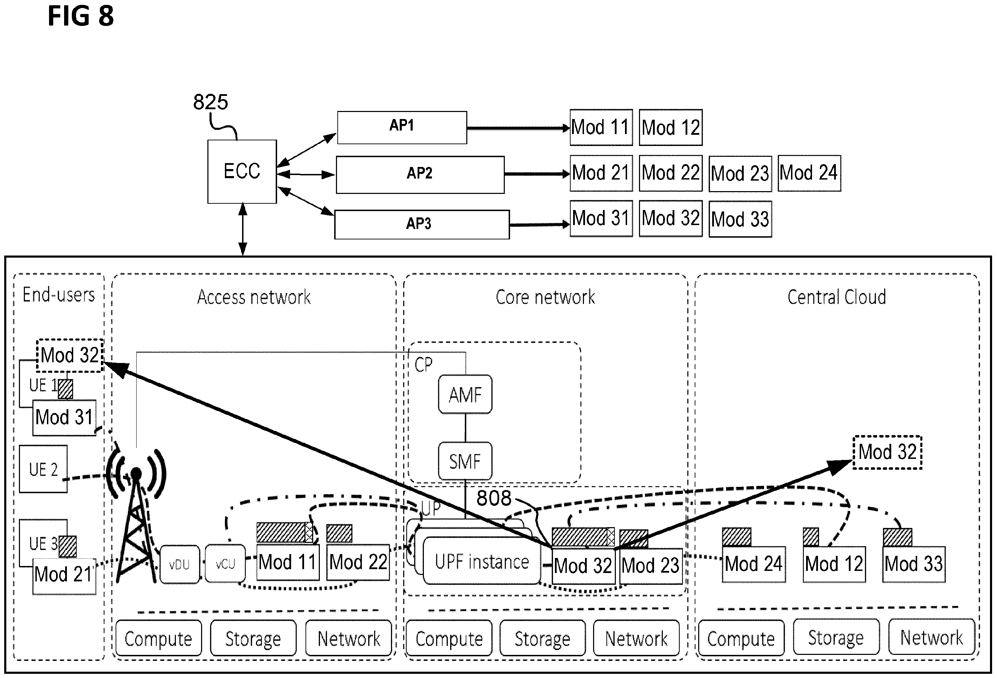

Figure 8 illustrates the migration of a module (the second module 808 of the third application AP3 in the present example) to another resource location to reduce its energy consumption. The module is migrated (e.g. at least partially) to another resource location (e.g. domain (e.g., central Cloud), or site in the same domain.

According to one embodiment, the ECC 825,
- if
   ∘ the application budget of an application is exceeded, or
   ∘ the excess of energy consumption of a module leads to that the resource location budget where it is provided is exceeded
      and
- if
   ∘ the other modules of the application deployed at other resource locations (e.g. domains) are at the limit of their module energy budgets (i.e. their provision at those resource locations uses the full module budgets and the energy consumption cannot be reduced, i.e. it is not possible to apply the penalty), or
   ∘ if the location budgets of the resource locations where the other modules of
      the application deployed are at their limit (i.e. are used to the fullest) decides that the module is migrated to another resource location to ensure the respect of the application budget, the module budget and the resource location budget (to where it is moved).

In the present example, if the location budget of the first mobile terminal 410 allows it, the ECC 825 moves the second module 408 of the third application AP3 to the first mobile terminal 410. Alternatively, e.g. if the location budget of the first mobile terminal 410 is fully used, the ECC 825 moves the second module 408 of the third application AP3 to the cloud 415.

The ECC 425 may for example have one or more of the following inputs
- Energy budget of the modules and the application
   ∘ E_b_{mod1}, E_b_{mod2}, ..., E_b_{modn}
   ∘ E_bₐₚₚ: the total energy budget of the application (e.g. agreed upon in a service level agreement (SLA)).
- Energy consumption of each module and total energy consumption of the application
   ∘ E_{mod1}(t), E_{mod2}(t), ..., E_{modn}(t)
   ∘ Eₐₚₚ(t) (may be calculated by the ECC from the module energy consumptions)
- Energy budget of the resource locations (involved in providing the application):
   ∘ E_b_{loc1}, E_bl_{oc2}, ..., E_b_{locS}
- Energy consumption of each resource location:
   o E_{loc1}(t), E_{loc2}(t), ..., E_{locS}(t)
- Energy consumption constraints
   ∘ ∀t: E_{modx}(t) ≤ E_b_{modx} (module budgets must not be exceeded)
   ∘ ∀t: E_{mod1}(t) + E_{mod2}(t) + E_{mod3}(t) = Eₐₚₚ(t) ≤ E_bₐₚₚ (the application budgets must not be exceeded)
   ∘ ∀t, Vx: E_{locx}(t) ≤ E__{blocx} (The total energy consumption of resource location x should not exceed E_b_{locx})
- Resource constraints related to each module (e.g. compute, storage, acceleration, network)
- Information about resources availability in the resource locations (compute, storage, etc.) and their energy consumption

The inputs listed here are given per application. The inputs that are function of time can be periodically fetched by the ECC 425 from a registry or fed to the ECC 425when one of the budgets is violated.

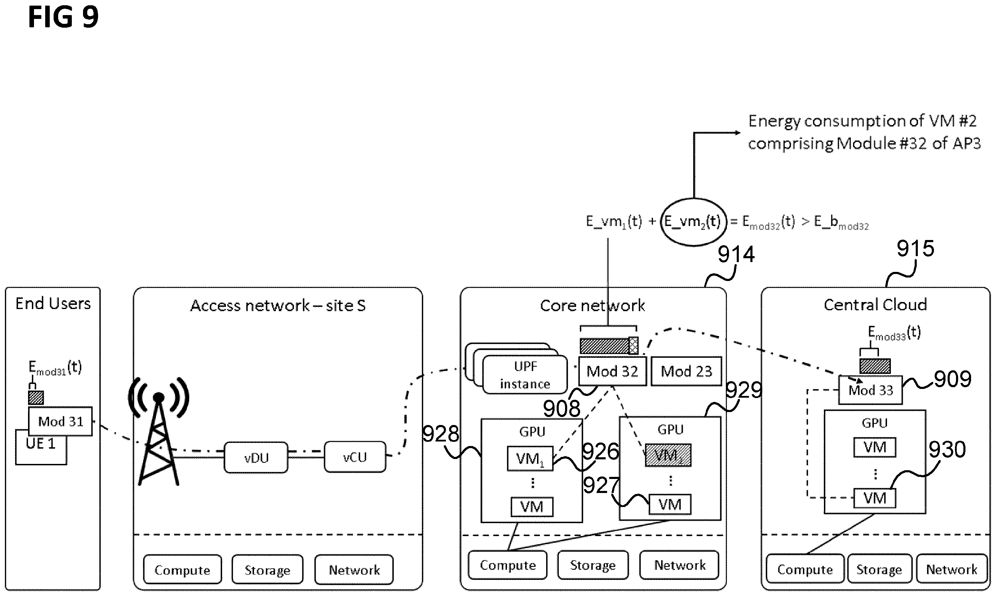

Figure 9 shows an example where the second module 908 of the third application AP3 is provided by two virtual machines 926 (VM1) and 927 (VM2) provided by GPUs 928, 929 in the core network 914 and the third module 909 of the third application AP3 is provided by a virtual machine 930 (VM3) in the cloud 915.

The energy consumption of VM1 is denoted by E_vm1(t) and that of VM2 by E_vm2(t). In the present example, the ECC determines from its input (which may include the energy consumptions of the virtual machines) that the energy budget for the second module 908 of the third application AP3 is exceeded: $E _ {vm}_{1} \left(t\right) + E _ {vm}_{2} \left(t\right) = {E}_{mod 2} \left(t\right) > E _ {b}_{mod 2}$

It should be noted that virtual machines are used as an example here. Containers or other virtualization technologies (i.e. other virtualization components) can also be used. Similarly, GPUs are used as an example. CPUs (central processing units), DPUs and NPUs (neural processing units) etc. can also be used.

Using its inputs, the ECC 425 monitors energy consumption in the managed resource locations, updates energy consumption logs, events and alarms tables in the energy consumption registry and according to one embodiment,
- when a module exceeds its allocated budget, the ECC 425 performs one or more of the following possible actions:
   o Perform the necessary computations (in terms of energy consumption and budget) and communicate the results to a mobile network orchestrator (or components managing the virtual/physical infrastructure) in order to find, for example, a suitable alternative placement of the module, in the same site, that reduces its energy consumption.
   o Compute a penalty in accordance with the excess of energy consumption, and
   o Coordinate with the orchestrator (or components managing the virtual/physical infrastructure) to apply the penalty in order to reduce the energy consumption of the other modules of the same application that are deployed in other sites.
   ∘ Coordinate with the orchestrator (or components managing the virtual/physical infrastructure) to find new location(s) for module(s) exceeding their energy consumption by collecting data about energy consumption in the managed sites, processing it, and provide the information to the orchestrator, which then perform the migration of the module to the most suitable site.
- when the energy budget of a resource location is violated
   o Detect of which modules energy consumption can be reduced without compromising QoS of the respective application.
   ∘ Detect of which modules energy consumption cannot be reduced and which modules therefore should be migrated.

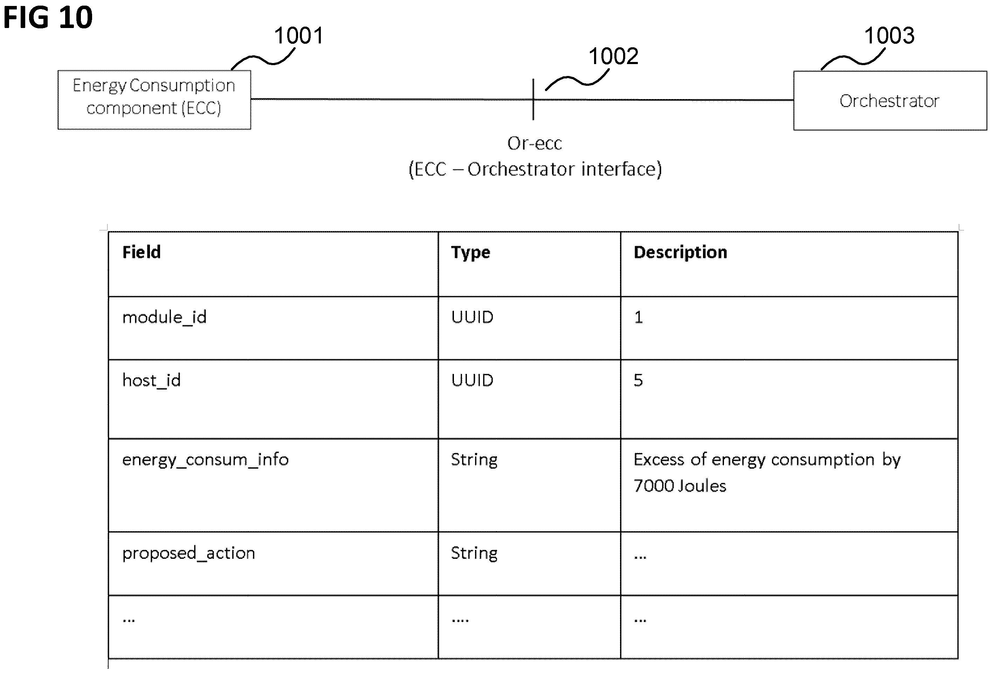

Figure 10 gives example of outputs of the ECC 1001 on an interface 1002 to the orchestrator 1003.

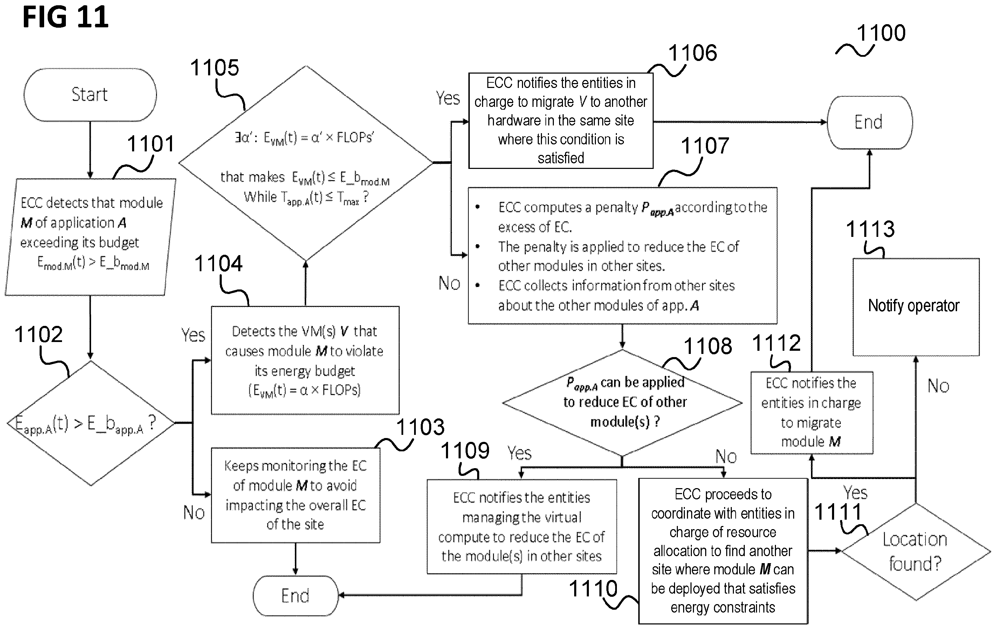

Figure 11 shows a flowchart 1100 of an example of a process performed by the ECC 425 for the case that a module budget (and possibly the application budget of the application to which the module belongs) is exceeded.

In 1101, the ECC 425 detects that module *M* of application ***A*** exceeds its budget: ${E}_{mod . M} \left(t\right) > E _ {b}_{mod . M}$

In 1102, the ECC 425 checks whether also the application budget is exceeded, i.e. whether E_{app.A}(t) > E_{_}b_{app.A.}

If the energy consumption of application A does not exceed its energy budget, i.e., E_{app.A}(t) > E_b_{app.A} is not fulfilled, the ECC 425 in 1103 keeps monitoring the energy consumption of module *M* to avoid exceeding the resource location budget of the resource location providing it and the process ends (assuming that the resource location budget is not exceeded).

If E_{app.A}(t) > E_b_{app.A} is fulfilled, the ECC 425 in 1104 determines a virtual machine VM (or multiple VMs) that causes module ***M*** to violate its energy budget, e.g. by having a consumption of ${E}_{VM} \left(t\right) = α \times FLOPs$

FLOPs (floating point operations) are used as an exemplary metric here. Other metrics can be used, such as IPC (instructions per cycle), CPU usage in Hertz, power usage in Watt, etc. Further, as above, virtual machine is only an example and this may also be a container etc.

In 1105 the ECC 425 then determines whether it is possible to provide the determined virtual machine with a lower amount of energy consumption while maintaining QoS, e.g. keeping processing time of under a maximum, e.g. whether $∃ α ′ : {E}_{VM} \left(t\right) = α ′ \times FLOPs$ that makes ${E}_{mod . M} \left(t\right) \leq E _ {b}_{mod . M}$ while ${T}_{app . A} \left(t\right) \leq {T}_{max}$

If it determines that it is possible to provide the determined virtual machine with a lower amount of energy consumption while maintaining QoS, the ECC 425 in 1106 notifies corresponding entities in charge to migrate the virtual machine to a resource location (in the same site) where this is satisfied. The process then ends.

If the ECC 425 determines that it is not possible to provide the determined virtual machine with a lower amount of energy consumption while maintaining QoS, the ECC 425 in 1107 computes a penalty ***P_{app.A}*** according to the excess of energy consumption to be applied (possibly split into multiple parts) to reduce the energy budget of one or more other modules provided by other resource locations (and possibly the energy consumption if they use more than their budget reduced by the respective penalty). For this (and the following), the ECC 425 may collect information about the other modules of app A from the other resource locations.

In 1108, the ECC 425 checks whether *P_{app.A}* can be applied to reduce the budget of the one or more other modules (e.g. this may not be possible if another module would then exceed its module budget (reduced) by the respective penalty without the possibility to reduce its energy consumption).

If it is possible, the ECC 425 notifies the respective resource locations (and e.g. entities managing virtual machines) to reduce the energy budget (and possibly the energy consumption) of the one or more other module in 1109 and the process ends.

If it is not possible, the ECC 425, the ECC 425 proceeds in 1110 to coordinate with entities in charge of resource allocation to find another site where module *M* can be deployed such that energy constraints are fulfilled.

If such a resource location is found in 1111, the ECC 425 notifies the entities in charge to migrate the module Min 1112 and the process ends.

If such a resource location cannot be found, the ECC 425 may for example inform the operator in 1113.

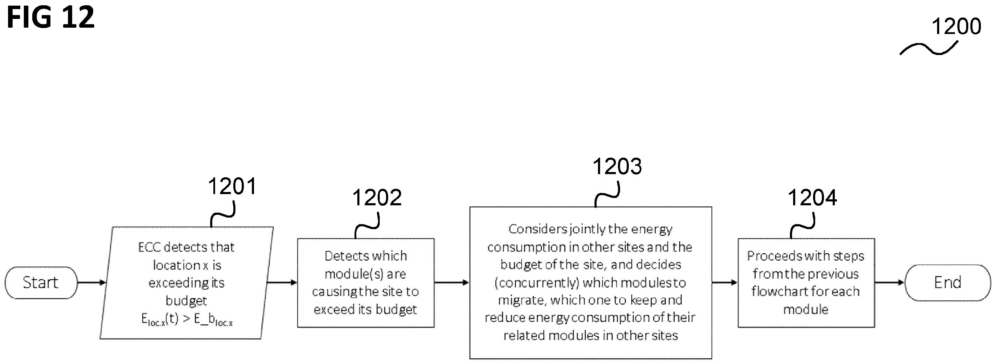

Figure 12 shows a flowchart 1200 of an example of a process performed by the ECC 425 for the case that a resource location budget is exceeded.

In 1201, the ECC 425 detects that resource location *X* is exceeding its budget E_{loc.X}(t) > E_b_{loc.X}.

In 1202, the ECC 425 determines which module or modules are causing the resource location to exceed its budget (the modules may be respecting their budgets, however, the total budget of the resource location maybe exceeded), for example, the ECC detects those with higher energy consumption.

In 1203, the ECC 425 considers jointly the energy consumption of other locations and the budgets of the hardware locations, and decides (concurrently) which modules to migrate, and which ones to keep in the same location but reduce their energy consumption (for example by moving their VMs to be deployed on other CPUs/GPUs of the same location).

In 1204, the ECCs 425 checks the module energy consumption and possibly performs the process of figure 11 for each module. The process then ends.

In the following, various implement options are given.

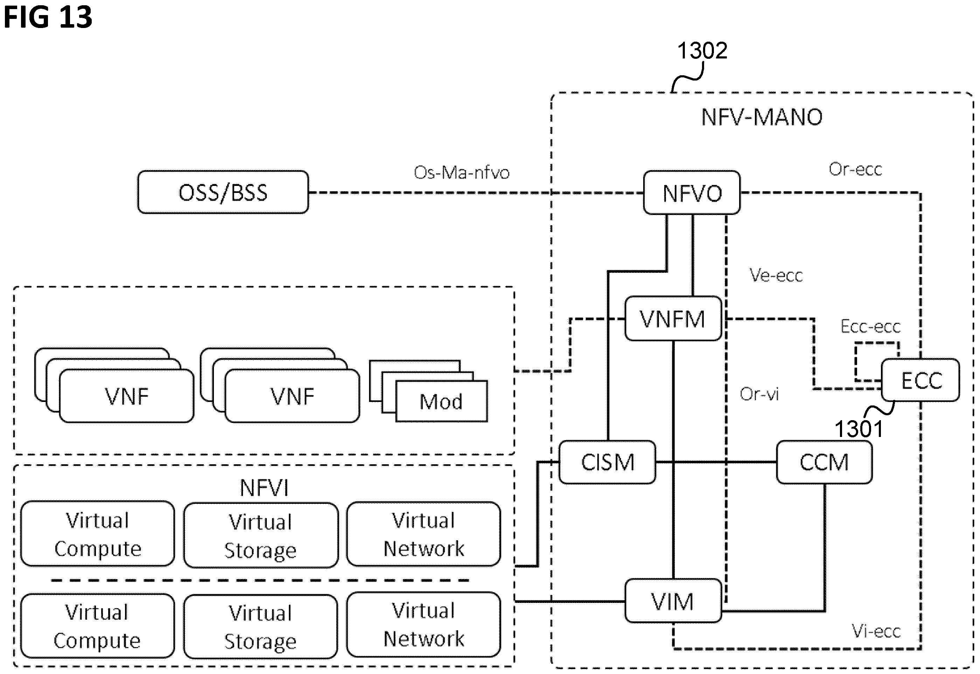

Figure 13 shows an implementation option where the ECC 1301 is part of an NFV-MANO (network functions virtualization management and orchestration) 1302.

In this implementation, the interfaces (or reference points) can be updated with information related to energy consumption, for example, as follows:
- Enabling Data
   o Os-Ma-nfvo:
      ▪ EnergyBudgets
      ▪ ActionTaken (related to migrating modules, applying penalties, etc.)
   o Ecc-ecc:
      ▪ EnergyComsumptionModulesStatus,
      ▪ EnergyComsumptionLocationStatus
      ▪ BudgetsInfo,
   o Or-vi:
      ▪ ActionToTake (in order to reduce the energy consumption of virtualized resources)
   o Ve-ecc:
      ▪ MigratedModules (the VNFM can notify the ECC about the successful migration of modules, the latter can still track the energy consumption of the migrated modules if they are deployed in the sites it monitors).
- Analytics Output of ECC
   o Or-ecc:
      ▪ RecommendedActions,
      ▪ Penalties,
      ▪ ProblemType,
      ▪ ProblemSeverity,
      ▪ ProblemDetails

The ECC is illustrated here as a standalone function or functional block. However, it can also be part of the NFVO (NFV orchestrator) 1303 or an MDAF (Management Data Analytics Function).

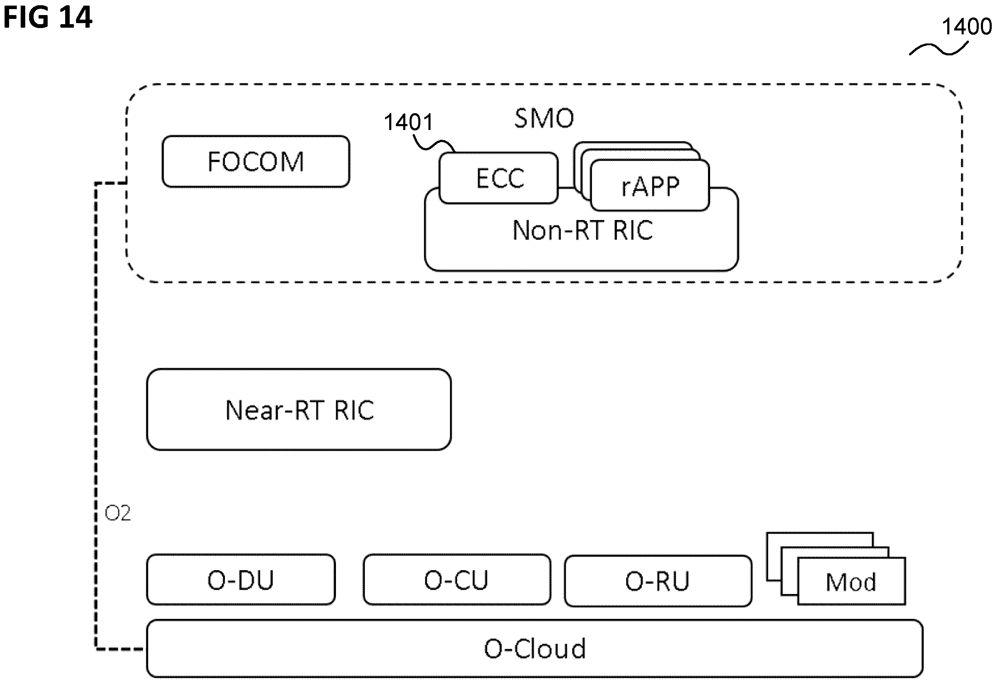

Figure 14 shows an implementation option where the ECC 1401 is implemented as an rAPP in a SMO (Service Management and Orchestration) 1402 of an ORAN (Open RAN) architecture 1400.

In this implementation, the O2 interface can be updated with (e.g. extended to carry) information related to energy consumption.

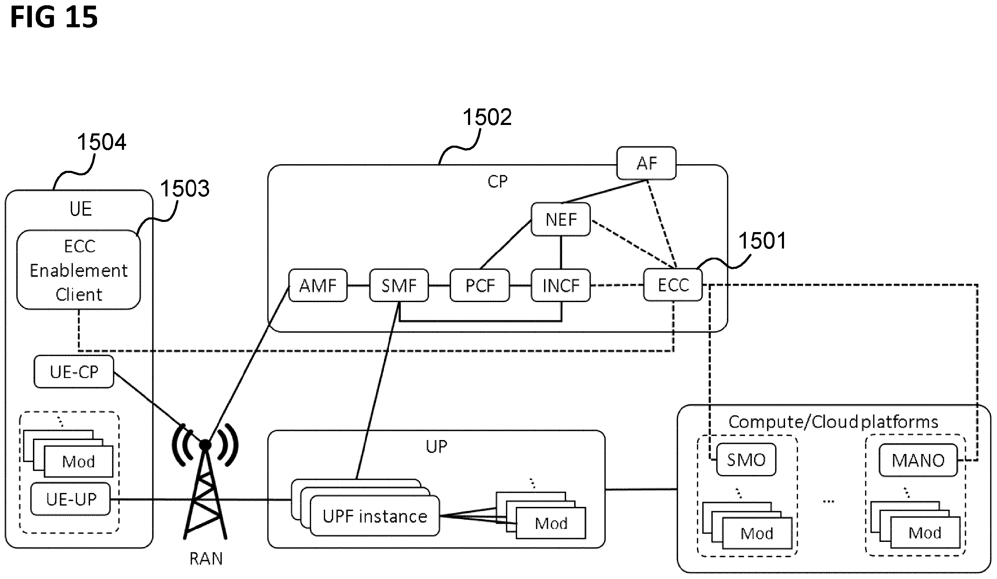

Figure 15 shows an implementation option where the ECC 1501 is part of a (e.g. 5G) core network 1502. The ECC 1501 can for example be a function in the core network 1502 if ECC usage is generic.

The ECC 1501 is in communication with the operating system (OS) of a UE 1501 including an ECC enablement client 1503. The ECC enablement client 1503 is a component to sync with the ECC 1501 if a module needs to be migrated to the UE 1504 or if there is a need to reduce the energy consumption of a module deployed in the UE 1504.

In figure 15 and the following figures, the dashed lines indicate newly introduced interfaces or interfaces to be updated to carry information elements related to energy consumption and energy budgets.

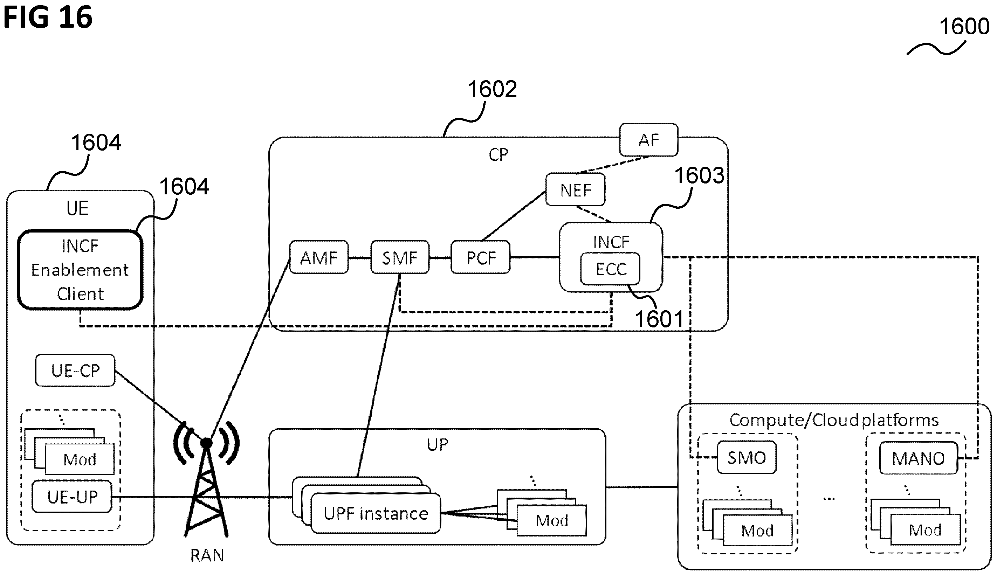

Figure 16 shows another implementation option where the ECC 1601 is part of a (e.g. 5G) core network 1602. In this example, the ECC 1601 is part of an INCF (In-Network Computing Function) 1603. This is for example applied if ECC usage is dedicated to INC.

The INCF 1603 is in communication with an INC enablement client 1604 in user plane.

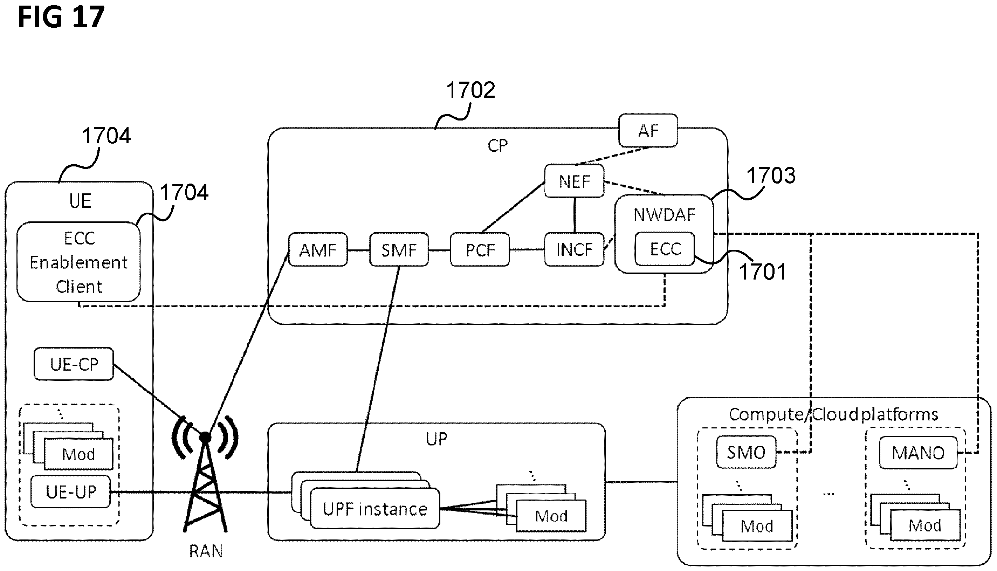

Figure 17 shows another implementation option where the ECC 1701 is part of a (e.g. 5G) core network 1702. In this example, the ECC 1701 is part of an NWDAF 1703 as a component that performs energy consumption related analytics.

The ECC 1701 is in communication with an ECC enablement client 1704 in user plane.

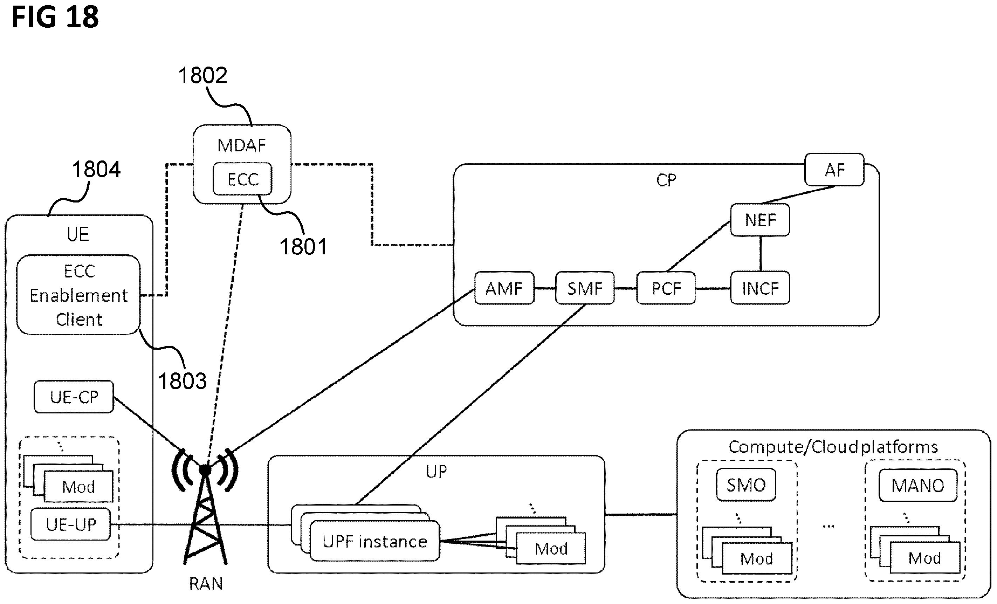

Figure 18 shows an implementation option where the ECC 1801 is part of an MDAF 1802 in 3GPP network management.

The ECC 1801 is in communication with an ECC enablement client 1803 in user plane.

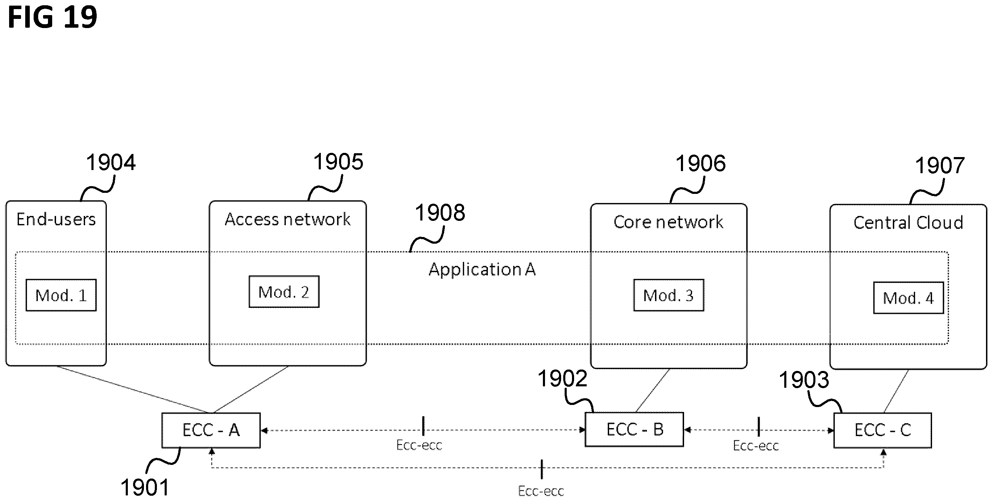

Figure 19 illustrates an ECC-to-ECC interface according to an embodiment.

Multiple ECC components 1901-1903 can be in charge of different resource locations (possibly in different domains/sites 1904-1907). To manage energy consumption of an application 1908 running across multiple resource locations, an interface Ecc-ecc between different ECCs can be defined to ensure the interoperability needed to monitor and manage energy consumption of an application.

Via the Ecc-ecc interface, the following information is for example communicated:
- EnergyComsumptionModulesStatus
- EnergyComsumptionLocationStatus
- BudgetsInfo (of modules, applications, and locations)
- BudgetViolationInfo
- Penalties
- AvailableResourcesRespctingEnergyBudget (in case of migrating modules to other sites)

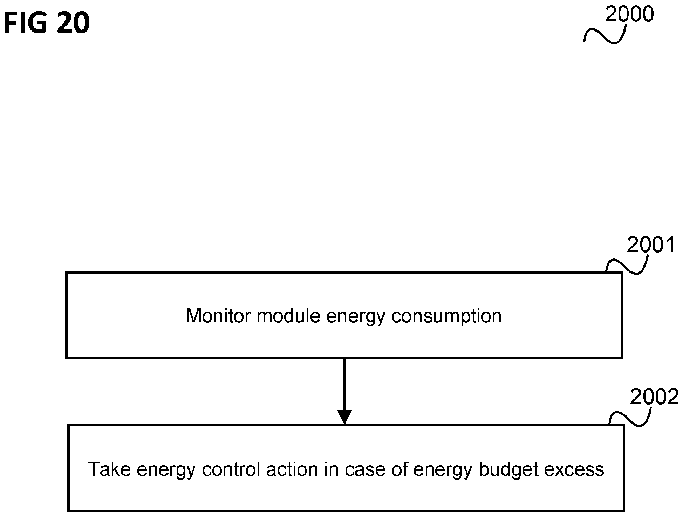

In summary, according to various embodiments, a method is provided as illustrated in figure 20.

Figure 20 shows a flow diagram 2000 illustrating a method for monitoring and controlling the energy consumption of distributed applications deployed across a data processing and communication system.

In 2001, for each module, deployed at a respective resource location, of multiple modules of an application, an energy consumption of providing the module at the respective resource location is monitored and it is checked whether the energy consumption of providing the module at the resource location exceeds a predetermined energy budget of the module. The modules for example perform different tasks or sub-tasks of the application. Each module is provided at a respective resource location, i.e. by data processing resources of a respective resource location, e.g. in a data processing component, in a device, at a site or within a domain.

In 2002, for each module of the multiple modules, in reaction to a detection that the energy consumption of the provision of the module at the respective resource location exceeds the energy budget of the module, one or more energy control actions to control the energy consumption for providing the application are performed.

According to various embodiments, the energy consumption of modules is monitored and if an energy budget is exceeded (in other words: violated), actions are triggered (e.g. by a component of the data processing and communication system component, denoted as ECC in the above examples, which may also be seen as an energy consumption control (or managing) component, which also does the monitoring). Performing the actions may involve that components of the data processing and communication system involved in the execution (i.e. running), e.g. supporting the execution or provision, of the application (in particular the provision of the modules) are instructed and/or controlled according to the actions (e.g. to change their configuration, how they provide the modules, which resources are used (or allocated) for the provision of modules) etc.

According to one embodiment, the method further comprises monitoring the global energy consumption at each location and checking whether the energy consumption of the location is respecting the energy budget allocated to the location. The method may further include, for each location over which modules of different applications are deployed, in reaction to a detection that the energy consumption of the whole location exceeds the energy budget of that location, performing one or more energy control actions to control the energy consumption at that exact location.

The method of figure 20 may be performed by a data processing and communication system component (e.g. comprising one or more data processing devices) implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for monitoring and controlling the energy consumption of distributed applications deployed across a data processing and communication system, comprising:
monitoring, for each module, deployed at a respective resource location, of multiple modules of an application, an energy consumption of providing the module at the respective resource location and checking whether the energy consumption of providing the module at the resource location exceeds a predetermined energy budget of the module; and
for each module of the multiple modules, in reaction to a detection that the energy consumption of the provision of the module at the respective resource location exceeds the energy budget of the module, perform one or more energy control actions to control the energy consumption for providing the application.

2. The method of claim 1, wherein the one or more energy control actions comprise at least one energy control action to reduce the energy consumption for providing the application.

3. The method of claim 1 or 2, wherein the one or more energy control actions comprise at least one energy control action to reduce the energy consumption for providing the module at the resource location.

4. The method of any one of claims 1 to 3, wherein the one or more energy control actions comprise changing the resource location at which the module is provided.

5. The method of any one of claims 1 to 4, wherein the one or more energy control actions comprise reducing the energy budget of one or more other modules of the multiple modules.

6. The method of any one of claims 1 to 5, wherein the one or more energy control actions comprises determining whether the module can be provided partially at the respective resource location and partially at at least one other resource location in a manner that providing the module partially at the respective resource location and partially at the at least one other resource location has an energy consumption which does not exceed the energy budget of the module and, in reaction to a determination that the module can be provided partially at the respective resource location and partially at at least one other resource location in a manner that providing the module partially at the respective resource location and partially at the at least one other resource location has an energy consumption which does not exceed the energy budget of the module, providing the module partially at the respective resource location and partially at the at least one other resource location.

7. The method of claim 6, wherein providing the module partially at the respective resource location and partially at the at least one other resource location comprises providing one or more first virtualization components for providing the module on the respective resource location and one or more second virtualization components one the at least one other resource location.

8. The method of claim 6 or 7, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module, providing the module completely at another resource location if it is possible to provide the module completely at another resource location in a manner that providing the module does not exceed the energy budget of the module.

9. The method of claim 6 or 7, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module, reducing the energy budget of one or more other modules of the multiple modules by, in total, an amount by which the energy consumption of providing the module at the resource location exceeds the energy budget of the module.

10. The method of claim 9, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module and it is not possible to reduce the energy budget of one or more other modules of the multiple modules by, in total, an amount by which the energy consumption of providing the module at the resource location exceeds the energy budget of the module, providing the module completely at another resource location if it is possible to provide the module completely at another resource location in a manner that providing the module does not exceed the energy budget of the module.

11. The method of claim 6 or 7, comprising, in reaction to a determination that the module cannot be provided partially at the respective resource location and partially at at least one other resource location in a manner that providing the module partially at the respective resource location and partially at the at least one other resource location has an energy consumption which does not exceed the energy budget of the module and it is not possible to provide the module completely at another resource location in a manner that providing the module does not exceed the energy budget of the module, reducing the energy budget of one or more other modules of the multiple modules by, in total, an amount by which the energy consumption of providing the module at the resource location exceeds the energy budget of the module.

12. The method of any one of claims 1 to 11, further comprising monitoring, for each module of the multiple modules, an energy consumption of the respective resource location and, in reaction a determination that a resource location providing one of the multiple modules exceeds an energy budget of the resource location, performing the one or more energy control actions for the determined module.

13. The method of any one of claims 1 to 12, wherein the one or more energy control actions comprise at least monitoring an energy consumption of providing the application and performing one or more further energy control actions depending on whether the energy consumption of providing the application exceeds an energy budget of the application.

14. A data processing and communication system component, configured to perform a method of any one of claims 1 to 13.
